# EUROPEAN PATENT APPLICATION

(11) **EP 2 436 261 A1**
(43) Date of publication of application: **04.04.2012**
(21) Application number: 11183148.3
(22) Date of filing: 28.09.2011
(51) Int. Cl.: A01F 29/02, A01F 29/12, B02C 18/06

(54) **Machine for shredding bedding products**

(30) Priority: 29.09.2010 IT BS20100159
(71) Applicant: Crono S.r.l., 25010 Isorella (Brescia) (IT)
(72) Inventor: Rubes, Claudio, 25010 Isorella (Brescia) (IT)
(74) Representative: Tirloni, Bartolomeo

(57) **Abstract**

Machine (1) for shredding bedding products comprising a frame (2); a shredding device (4); a supply mouth (6); a device for crumbling (12) the bedding products shredded by the shredding device comprising: a rotor (13) comprising a plurality of knives (19) swively mounted on the peripheral portion (15) of the rotor so that they can rotate freely with respect to the rotor, the knives being configured for crumbling, as a result of rotor rotation, the bedding products shredded from the shredding device; and a grid (17) arranged to surround at least a portion of the peripheral portion of the rotor, in a position radially external to the knives, and provided with a plurality of openings (18) radially passing through the grid, and a conveying device (70) mounted on the frame and configured for conveying to the supply mouth the bedding products which cross the openings of the grid.

## Description

The present invention relates to a machine for shredding bedding products, such as hay, straw, cornstalks, etc.

It is known about machines for shredding bedding products and fodder, typically intended to the drawing and operated by the motive power of a tractor, capable to shred and, typically, distribute, for example directly in the animals berths or in the manger, bedding products and fodder. These machines are provided with a rotating disc substantially circular and flat, with a face, provided with fixed teeth, disposed vertically and the axis of rotation disposed horizontally. On the face of the disc opposite to the toothed face a plurality of vanes is mounted, the vanes developing perpendicular to the disc and along the radial direction, protruding with an appropriate section from the circumferential edge of the disc. The vanes are housed in an chamber communicating with a mouth of supply. In use, the product to be shred is advanced against the toothed face of the disc which, rotating, shreds the product. The shredded product falls into said room where it is placed in rotation by the vanes up to be supplied from the mouth of supply due to the tangential velocity gained. In a known version of the above said machine for shredding, the protruding sections of the vanes are replaced by a plurality of moving knives positioned on the circumferential edge of the disc, to allow the cutting of the product to be shredded with less power consumption. In this case, however, the launch distance of the shredded product decreases with respect to that obtained with the vanes. The knives are made of a foil in one piece having a first portion swively hinged to the disc and coplanar thereto and a second portion folded with respect to the first and having two lateral opposite edges provided with a cutting blade. In use, the knives are subject to a rotation additional to that of the rotor, thus crumbling the product with their lateral blades.

The Applicant has found that current machine for shredding are not without drawbacks and can be improved under various aspects.

In particular, the Applicant has found that known machines are not able to shred the product with a predetermined average size sufficiently short. For example, known machines shreds straw or hay with an average size greater than about 10 cm. It is noted that decreasing the average size of the shredded product, its ability to absorb liquid increases (which is an important function of the beddings), inasmuch for example the outer surface of the stem of straw or hay, when intact, has little absorbency, while the inner fibers of the stem have a higher absorbency. Shorter is the average length of the piece of stem, more cut ends (in which internal fibers are exposed) are into the mass unit of shredded product. Another drawback of known devices found by the Applicant is that the effective size of the shredded product is not uniform, for example ranging from a few cm up to over 20 cm.

Another drawback found by the Applicant is that known machine are not able to ensure that the shredded product has a size substantially not greater than a predetermined desired size.

Moreover, the Applicant has observed that known devices are unable to effectively shred the product.

The Applicant has also found that known shredding machines are limited substantially to shred the bedding products for reducing them to pieces of stem cut at both ends and with the middle part of the piece on average substantially intact or slightly torn. Thus the ability to absorb liquid is limited because, as mentioned, the outer surface of the stem, which is intact, has a little absorbency.

Another drawback found by the Applicant is that known machines are not able to cut finely the product maintaining a launch distance sufficiently high.

The Applicant also noted as known devices are characterized by a complex structure and/or by a high cost of implementation.

Under these circumstances, the aim underlying the present invention in its various aspects and/or embodiments is to provide a machine for shredding bedding products which is able to obviate one or more of the drawbacks mentioned above.

This aim and others, if any, that will be more apparent in the following description are substantially achieved by a machine for shredding bedding products according to one or more of the appended claims, each of them being considered alone (without its related dependent claims) or in any combination with other claims, and according to the following aspects and/or embodiments, variously combined, also with the aforesaid claims.

The invention relates to a machine for shredding bedding products comprising a frame, a feeding mouth associated to the frame for the loading of the bedding products in the machine, a shredding device mounted on the frame for shredding said bedding products and a supply mouth associated to the frame for the supply of the bedding products after the shredding.

In the present invention the term "bedding products" can comprise, as well as for example straw, hay or cornstalks, also products like fodder of various type, brushwood, pruning remains, etc.

In one aspect the machine further comprises:
- a device for crumbling the bedding products shredded by the shredding device comprising: a rotor swively mounted on said frame so that it can rotate around an axis of rotation and having a peripheral portion disposed concentrically to said axis of rotation, said rotor defining a radial direction perpendicular to the axis of rotation, the rotor comprising a main body and a plurality of knives swively mounted on the main body near the peripheral portion of the rotor so that they can rotate freely with respect to the main body with relative axis of rotation parallel to the axis of rotation of the rotor, where said knives are configured for crumbling, as a result of the rotor rotation (and of their consequent additional rotation), the bedding products shredded from the shredding device and a grid mounted (preferably rigidly) on said frame and arranged to surround at least a portion of the peripheral portion of the rotor, in a position radially external to said knives, and provided with a plurality of openings radially passing through the grid, and
- a conveying device mounted on the frame and configured for conveying to the supply mouth the bedding products which cross said openings of the grid.

The Applicant thinks that the combination of the aforesaid technical features, in particular the presence of the grid external to the knives and provided with through openings and of the conveying device configured for conveying to the supply mouth the bedding products which cross the openings of the grid, allows to supply the shredded bedding product with a predetermined average size (for example with the desired fineness). In fact, the grid lets the pieces, for example of hay or straw, pass through the openings substantially only when they have a length comparable with (typically less than) the dimensions of the aforesaid openings. Thus it is possible, by selecting opportunely the dimensions (and/or the shape of the openings), to supply shredded products with a desired average size. Moreover, the aforesaid machine can improve the uniformity of the supplied sizes and/or supply a shredded product whose size substantially does not exceed a predetermined length, inasmuch typically the piece for example of straw or hay crosses the openings as soon as it is crumbled (by knives) to a length comparable to the dimensions of the openings. It should be noted that, in the normal use of the machine of the present invention, it is not excluded the case (and indeed generally it happens) that a small percentage of pieces of straw or hay is able to cross the openings of the grid 'slipping' in the latter for their length, although being sensibly longer than the dimensions of the latter. Just as, vice versa, it is not excluded that a small percentage of pieces of straw or hay is able to cross the openings only after being shredded to a length sensibly less than the dimensions of the openings. Nevertheless, the final distribution of supplied sizes can result significantly more uniform than is the case with known machines. In one aspect, each knife has a prevailing longitudinal development, a first end swively fixed to the main body and a second end which is free and longitudinally opposite to the first. Preferably the second end has an end edge, distal to said first end, provided with a cutting blade. Preferably the two opposed longitudinal edges of each knife are provided with a respective cutting blade. Preferably each knife consists of a plate substantially flat, more preferably with a substantially rectangular plan with the two longitudinal edges parallel.

In one aspect said knives are swively mounted on the main body so that they can make a complete free rotation with respect to it. 'Free rotation' or 'rotate freely' means that the knives are idle, namely passive. In one aspect said knives and the grid are configured for cooperating together for crumbling the shredded bedding products. Preferably the minimum distance between the knives and the grid is such that, when the knives are in a position corresponding to such a minimum distance (typically oriented along the radial direction of the rotor), the bedding products are pressed between the knives and the grid and crumbled by the aforesaid cutting blade of the distal end edge, which is directed towards the grid. Preferably such distance is greater than or equal to 5mm and/or less than or equal to 20mm, preferably less than or equal to 15mm.

In one aspect, said knives are angularly distributed, preferably with regularity, along the peripheral portion of the rotor. Preferably the knives are distributed in stacks of knives angularly distributed around the axis of rotation, preferably with regularity, on the peripheral portion of the rotor. Preferably, the stacks of knives are greater than or equal to 4, more preferably greater than or equal to 6, and/or less than or equal to 16, more preferably less than or equal to 12. Preferably, each stack of knives consists of a number of knives greater than or equal to 2, more preferably greater than or equal to 4, and/or less than or equal to 12, more preferably less than or equal to 10.

In one aspect the axis of rotation of the rotor is horizontal.

In one aspect, the main body of the rotor comprises a disc, concentric to said axis of rotation, having laminar shape and lying (substantially) on a plane (substantially) transverse (e.g. orthogonal) to said axis of rotation. Preferably the knives (or each stack of knives) are swively mounted on a respective pin having a first end mounted on said disc near a perimeter portion of it radially distal from the axis of rotation. The term 'disc' means a discoid body having preferably a circular shape, but which can also have hexagonal shape, octagonal shape, etc.

In one aspect, the main body of the rotor comprises a plurality of conveying vanes (preferably evenly) angularly distributed around the axis of rotation, each vane having a face radially proximal to the axis of rotation and lying on a surface developing substantially along the radial direction and parallel to the axis of rotation. In such a way such active portion, during the rotation of the rotor, acts as a conveying vane of the shredded material from the axial zone of the rotor to the peripheral portion of the rotor. Preferably the conveying vanes are greater than or equal to 4 and/or less than or equal to 12, more preferably less than or equal to 8. Preferably the disc and the plurality of conveying vanes are mutually integral.

In one aspect, the main body of the rotor comprises a plurality of supports arranged in rays (substantially) concentric to said axis of rotation of the rotor, where each of said pin has a second end mounted on a respective support near a respective end radially distal to the axis of rotation. Preferably the disc and the plurality of supports are mutually integral. Preferably each first portion of support has a respective end radially distal to the axis of rotation having a radial distance from the aforesaid pin such to allow the full rotation of the knives.

In one aspect, the rotor comprises an additional disc integral with, and parallel to, said disc and concentric to said axis of rotation. Preferably the additional disc is at a certain distance from the aforesaid disc and each of said pin has a second end mounted on said additional disc near a respective perimeter portion of it radially distal from the axis of rotation.

In one aspect, the grid is disposed to completely surround the peripheral portion of the rotor, in a position radially external to said knives.

In one aspect the grid has a cylindrical band shape substantially coaxial to the axis of rotation. In one aspect the grid has laminar shape and lies on a surface having in every point the radial direction as normal.

In one aspect, the rotor and the grid define a crumbling area radially inside to the grid suitable for containing the bedding products shredded by the shredding device and subjected to crumbling and/or grinding by knives. The rotor and the grid are preferably configured so that bedding products can pass from the crumbling area to the conveying device (substantially) only through the openings of the grid.

In one aspect, the radially through openings are evenly distributed on the entire grid. Preferably, the maximum dimension of the openings is less than or equal to 80mm, more preferably less than or equal to 50mm, still more preferably less than or equal to 40mm. Preferably, the minimum dimension of the openings is greater than or equal to 5mm, more preferably greater than or equal to 10mm. Preferably, the radially inner surface of the grid is provided with a plurality of teeth protruding towards the axis of rotation of the rotor transversely to the surface of the grill (preferably in radial direction). Thus advantageously the combined action of knives and teeth produces a grinding of the pieces of stem of the bedding material, for example straw or hay, because the stems are dragged against the teeth and tend to tear also along the longitudinal direction of the stem, thus exposing more of the internal fibers. Preferably each tooth has at least one point facing towards the axis of rotation. Preferably, at least a subgroup of said openings (which may also consist in the entirety of the openings of the grid) is provided with said teeth protruding from at least a portion of the edge of the openings.

In one aspect, the grid is obtained by bending one or more foils and die-cutting the openings. Preferably, the aforesaid teeth of the subgroup of openings are obtained by drawing.

In one aspect, the conveying device comprises a conveying chamber arranged to completely surround the grid in a position radially external to it and configured for receiving and containing the bedding products which cross the openings of the grid. Preferably the conveying chamber is in communication with the supply mouth to allow the passage of the bedding products from the chamber to the supply mouth.

In one aspect, the conveying device comprises a plurality of supply vanes swively mounted on the frame so that they can rotate with respective axis of rotation parallel to (preferably coincident with) the aforesaid axis of rotation of the rotor. Preferably the supply vanes are (evenly) angularly distributed around the axis of rotation. Preferably the supply vanes are configured for putting in rotation, due to their rotation, the bedding products within the conveying chamber, up to their supply through the supply mouth due to the tangential velocity gained.

Preferably, each vane has a second portion radially distal from the axis of rotation and in a position radially external to the grid and presenting a face developing parallel to the aforesaid axis of rotation and to the radial direction. Preferably the supply vanes are integral with the rotor, more preferably are rigidly mounted on the aforesaid disc. Preferably, each vane has a first portion, radially proximal to the axis of rotation and disposed from the opposite side of the knives with respect to the disc (preferably rigidly mounted on the disc), which extends along the radial direction and is provided with a face developing parallel to the aforesaid axis of rotation and to the radial direction.

The supply vanes can advantageously realize the desired throw distance of the shredded product.

In one aspect, the shredding device includes a shredding member provided with teeth and swively mounted on the frame with its axis of rotation orthogonal or parallel (preferably coincident) to the axis of rotation of the aforesaid rotor, preferably horizontal.

In one aspect, the shredding member consists of the aforesaid additional disc.

In one aspect the machine for shredding is a trailer and is intended to be driven by the motive power of an agricultural vehicle such as a tractor.

Further characteristics and advantages will be more evident from the detailed description of some exemplary though not exclusive embodiments, among which also a preferred embodiment, of a machine for shredding bedding products according to the present invention. This description will be disclosed below with reference to the accompanying drawings, provided to a merely indicative and therefore nonlimiting purpose, in which:
- Figure 1 is a perspective view of a first embodiment of the machine for shredding bedding products according to the present invention, with some parts removed;
- Figure 2 is a further perspective view of the machine of Figure 1, partially sectioned and with some parts removed;
- Figure 3 is a still further perspective view of the machine of Figure 1, with some parts removed and partially sectioned;
- Figure 4 is a perspective view showing a part of the machine of Figure 1;
- Figure 4A shows a detail of Figure 4;
- Figure 5 is a perspective view of a second embodiment of the machine for shredding bedding products according to the present invention, with some parts removed;
- Figure 6 is a perspective view showing a part of the machine of Figure 5 and partially sectioned.

With reference to the accompanying figures, a machine for shredding bedding products according to the present invention is globally referred to with the numeral 1. In general, the same numeral is used for the same elements, in case in their variants of realization.

The machine for shredding comprises a frame 2, typically having a function of bear the entire structure of the machine, and a shredding device 4 mounted on the frame for shredding the bedding products. The machine comprises a feeding mouth 3 associated to the frame for the loading of the bedding products in the machine, typically provided with a loading door 5 actuated for example by a hydraulic piston system.

The entire hydraulic system of the machine (which is typically actuated by the motive power of the agricultural vehicle associated with the machine) is not shown in the figures and will not be described in detail, as such may be of a known type.

The machine comprises, associated to the frame, a supply mouth 6 for the supply of the bedding products after the shredding, optionally provided with a system of doors 7 actuated for example by hydraulic pistons.

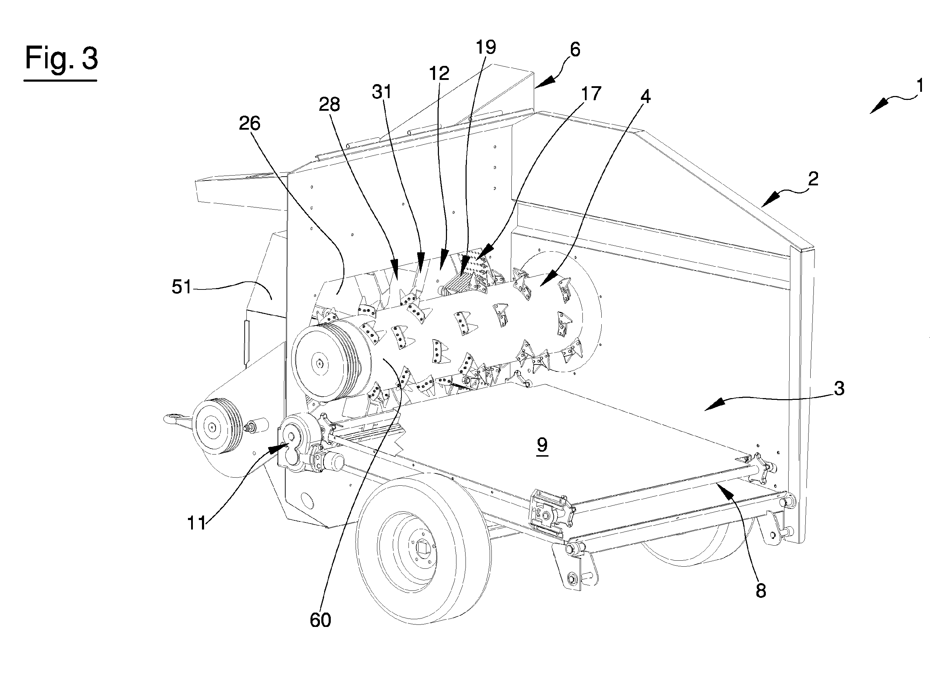

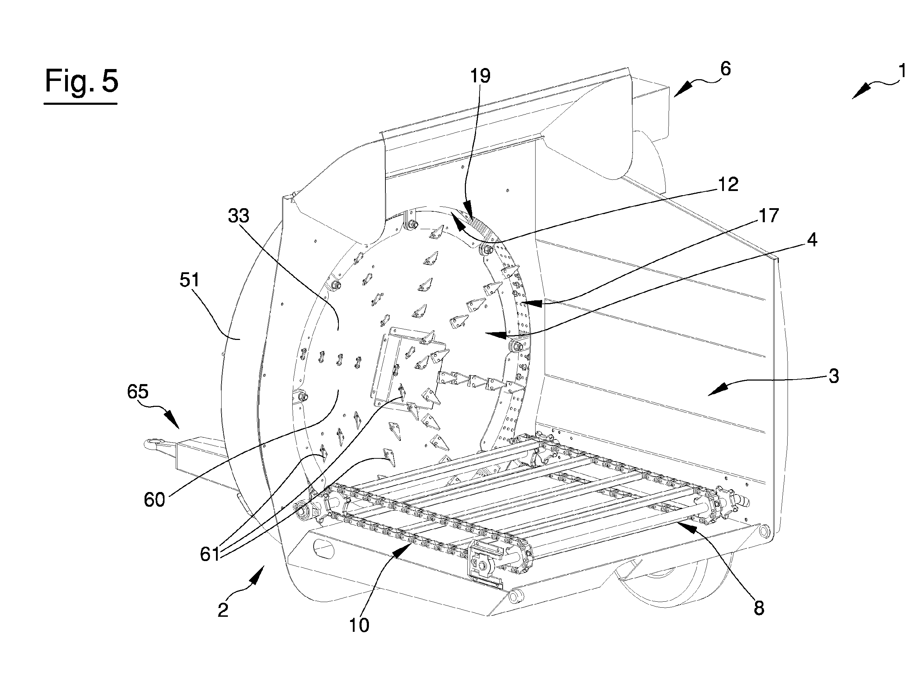

The machine can comprise a feeding system 8 comprising a removable bottom 9 (not shown in Figure 5) and a feeding carpet 10 (partially omitted in Figure 3), typically operated by a hydraulic motor 11, for powering the shredding device moving toward the latter the bedding products loaded at the feeding mouth.

Some parts of the frame 2, of the feeding mouth 3 and supply mouth 6, of the shredding device 4 and of the feeding system 8, including their movement and/or actuation systems, will not be described and/or illustrated in detail, as may for example be of a known type.

The machine preferably comprises a device for crumbling 12 the bedding products comprising a rotor 13 swively mounted on the frame so that it can rotate around an axis of rotation 14 and having a peripheral portion 15 disposed concentrically to the axis of rotation, the rotor defining a radial direction 16 (more precisely an infinity of radial directions 16) perpendicular to the axis of rotation, and a grid 17 stiffly mounted on the frame and provided with a plurality of openings 18 radially passing through the grid. Preferably the rotor comprises a main body 38 and a plurality of knives 19 swively mounted on the main body near the peripheral portion of the rotor so that they can rotate freely with respect to the main body with relative axis of rotation parallel to the axis of rotation of the rotor.

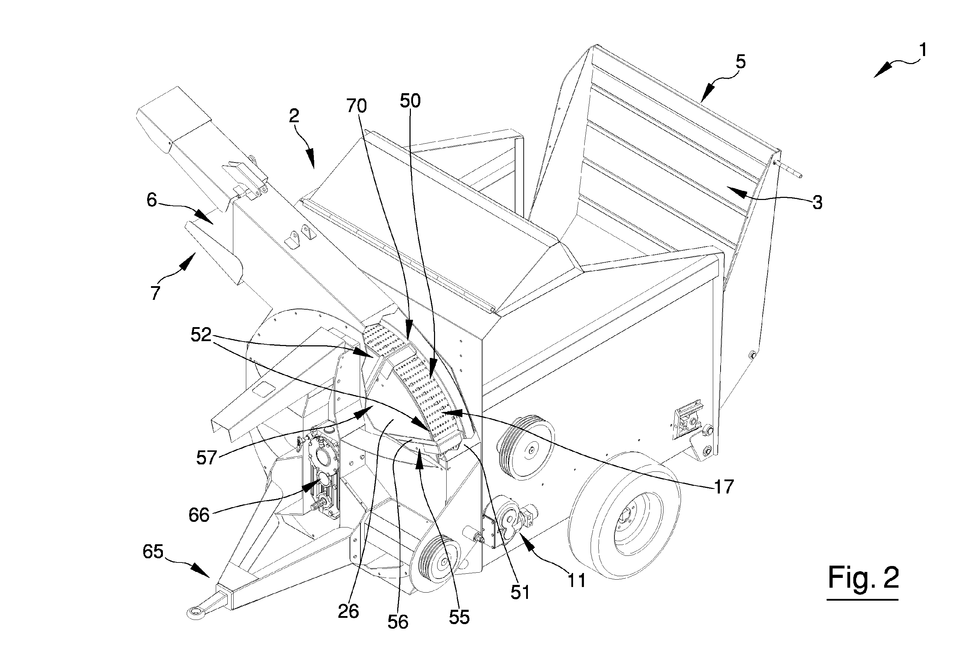

The machine preferably further comprises a conveying device 70 (partially visible for example in Figure 2) mounted on the frame and configured for conveying to the supply mouth the bedding products which cross the openings 18 of the grid.

Preferably each knife 19 has a first end 20 swively fixed to the main body and a second end 21 which is free and longitudinally opposite to the first and has an end edge, distal to the first end, provided with a cutting blade 22. Preferably the two opposed longitudinal edges of each knife are provided with a respective cutting blade 23. Preferably each knife consists of a plate 24 substantially flat, more preferably with a substantially rectangular plan with the two longitudinal edges parallel. Preferably the first end 20 has a respective end edge rounded, typically semicircular. Preferably the second end 21 has the aforesaid distal edge provided with the blade 22 rounded, typically as an arc of a circle having radius comparable to the radius of the rotor.

Preferably the knives are distributed in stacks 25 of knives angularly distributed with regularity around the axis of rotation on the peripheral portion of the rotor. Exemplary the stacks of knives are eight. Exemplary each stack of knives consists of eight knives.

Preferably, the main body of the rotor comprises a disc 26 concentric to the axis of rotation having laminar shape and lying on a plane orthogonal to the axis of rotation. Preferably each stack of knives is swively mounted on a respective pin 27 having a first end mounted on the disc near a perimeter portion of it radially distal from the axis of rotation.

Preferably, the main body of the rotor comprises a plurality of conveying vanes 28 angularly distributed with regularity around the axis of rotation, each vane having a full face 29 radially proximal to the axis of rotation and lying on a surface developing substantially along the radial direction and parallel to the axis of rotation.

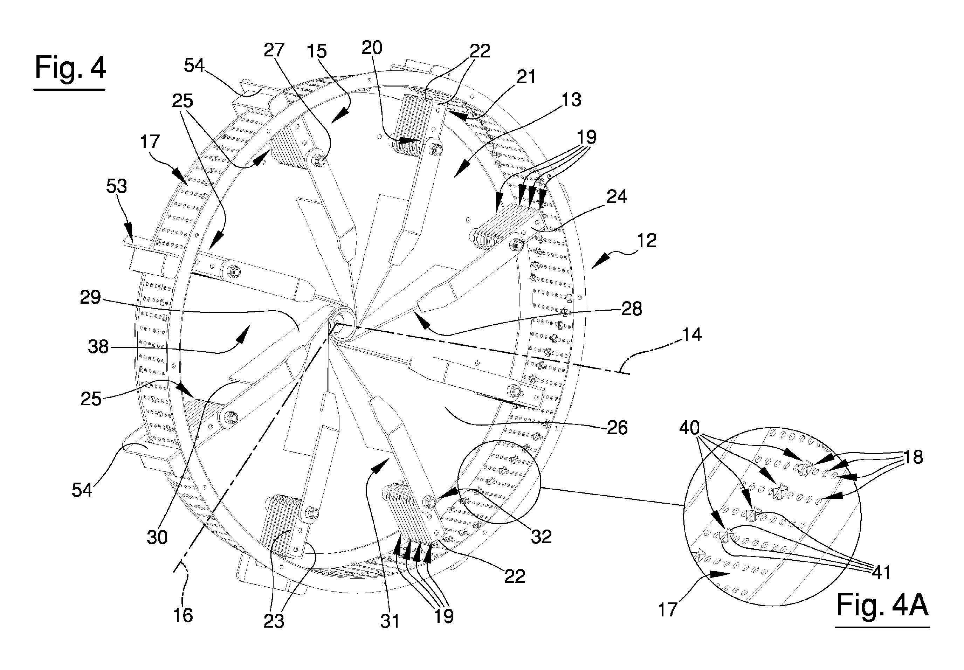

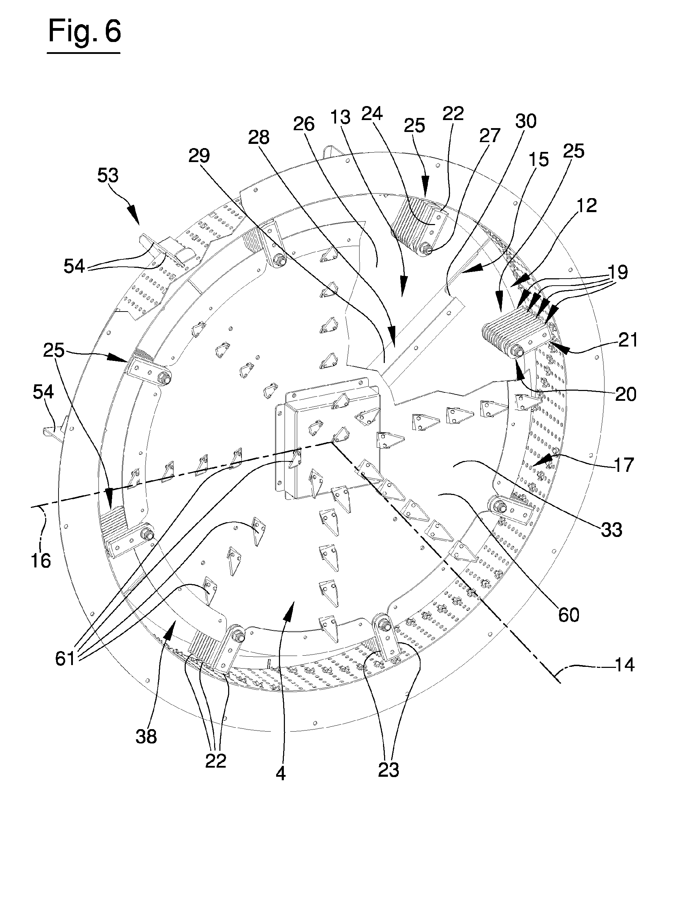

Preferably the end 30 radially distal to the axis of rotation of the face 29 ends in a position radially internal to the peripheral portion of the rotor. Exemplary the conveying vanes are four (as in the example shown in Figure 5 and 6) or eight (as in the example shown in Figure 3 and 4). Preferably the conveying vanes are mounted with joint and/or welded to the disc.

In an embodiment, as in the example shown in Figure 3 and 4, the main body of the rotor comprises a plurality of supports 31 arranged in rays substantially concentric to the axis of rotation 14, and each pin 27 has a second end mounted on a respective support 31 near a respective end 32 radially distal to the axis of rotation.

Preferably, a first portion of each support 31 radially proximal to the axis of rotation consist in the aforesaid conveying vane 28. Preferably, the first portion of each support is a flat foil parallel to the axis of rotation and to the radial direction. Preferably the respective first portion of each support is adjacent to and in contact with the disc, typically having an edge mounted with joint on the disc.

In a further embodiment, as in the example shown in Figure 5 and 6, the rotor comprises an additional disc 33 integral with, and parallel to, the aforesaid disc 26 and concentric to the axis of rotation. Preferably each of said pin has a second end mounted on said additional disc near a perimeter portion of it radially distal from the axis of rotation.

Preferably the grid has a laminar shape of a cylindrical band substantially coaxial to the axis of rotation and lying on a surface having in every point the radial direction as normal.

Preferably the width of the cylindrical band along the direction of the axis of rotation is comparable to the height of the stacks of knives along the axial direction.

Preferably the radially through openings are evenly distributed on the entire grid. Preferably the openings have substantially circular shape, but can also be for example hexagonal or triangular or square. Exemplary, the diameter of the openings is equal to about 15mm.

Preferably, some openings 40 are each provided with four opposed teeth 41 which protrude from the respective edge of the opening toward the axis of rotation of the rotor in radial direction and substantially of triangular shape.

The grid and/or the knives can be made for example of steel or stainless steel.

Preferably, the conveying device comprises a conveying chamber 50 arranged to completely surround the grid in a position radially external to it and in communication with the supply mouth. Preferably the conveying chamber is defined by the radially external surface of the grid and by a case 51 and has a substantially toroidal shape.

Preferably the conveying device comprises a plurality of supply vanes 52 stiffly mounted on the rotor (preferably mounted on the disc 26). Preferably the supply vanes are (evenly) angularly distributed around the axis of rotation, for example in number of eight. Preferably, each vane has a second portion 53 radially distal to the axis of rotation and in a position radially external to the grid and presenting a full face 54 developing parallel to the aforesaid axis of rotation and to the radial direction. Preferably the second portion 53 has a T section along a plane perpendicular to the axis of rotation, said face 54 corresponding to the top bar of the T.

Preferably, each vane has a first portion 55 (exemplary partially visible in Figure 2) radially proximal to the axis of rotation and stiffly mounted on the side of the disc 26 opposite to the side facing the knives), which develops along the radial direction and is provided with a full face 56 developing parallel to the aforesaid axis of rotation and to the radial direction. Preferably, during the rotation of the supply vanes, their first portion rotates within a housing chamber 57 of the first portion of the supply vanes in communication with the conveying chamber, so that to centrifuge the bedding products in the housing chamber towards the conveying chamber.

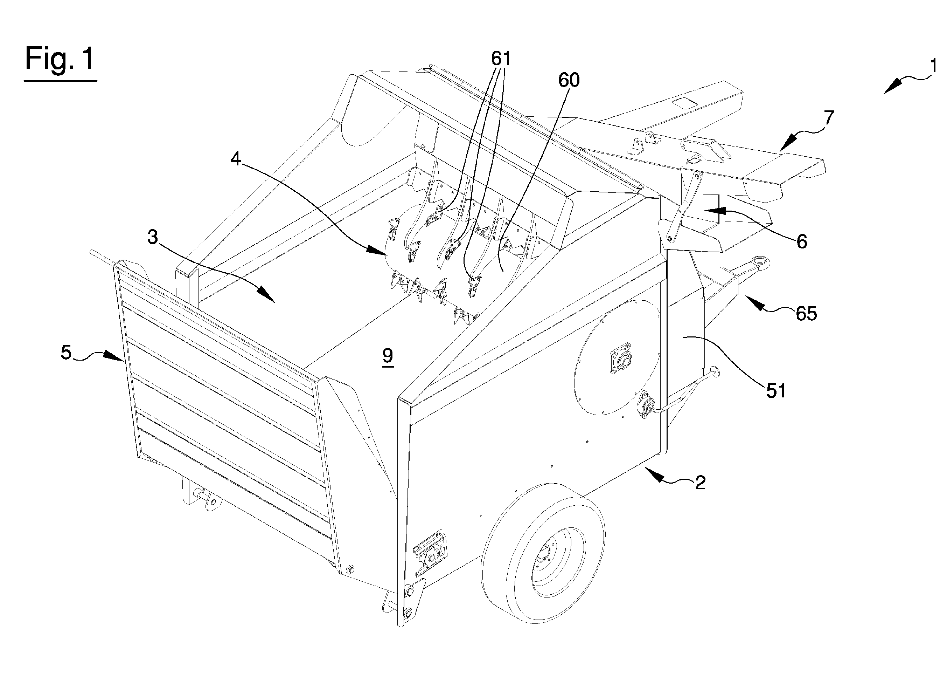

Typically, the shredding device comprises a shredding member 60 provided with respective teeth 61 and swively mounted on the frame with its axis of rotation orthogonal with (as exemplary shown in Figure 1-3) or parallel to (as exemplary shown in Figure 5 and 6) the axis of rotation of the aforesaid rotor.

In an embodiment (as exemplary shown in Figure 5 and 6), the shredding member 60 coincides with the aforesaid additional disc 33.

Typically the machine for shredding is a trailer (but can also be self-propelled) and can include a rudder 65 for coupling to an agricultural vehicle such as a tractor and one or more axes provided with passive wheels for the towing. Typically the machine is intended to be driven by the motive force of the agricultural vehicle (but can also be self-driven). For this purpose typically comprises mechanical and/or hydraulic interface members 66 (shown only partially because they can be of a known type), configured for interfacing with corresponding interface members mounted on the agriculture vehicle and for receiving the motive force (mechanical and/or hydraulic) by the latter for transmitting, through appropriate transmission members (also shown only partially because they can be of a known type), to the active devices of the machine, such as for example (typically through mechanical transmission means) the rotor, the shredding member, the supply vanes, and/or (typically through hydraulic transmission means) the feeding carpet.

The operation of the machine initially involves to load through the feeding mouth, typically with the rotor already in rotation, a certain amount of bedding products, such as straw or hay, or other materials such as fodder, which may be free or packed in round bales or prismatic bales. The feeding system 8 pushes the product against the shredding device, which provides to a rough shredding of the product, as already known.

The so shredded material falls within the crumbling device 12, in particular within the crumbling area inside the grid. Here it is put in rotation due to the rotation of the conveying vanes 28 (and to a less extent by the rotation of the knives). These latter cut the product due to their rotation given by a combination of the rotation of the rotor around the axis of rotation 14 and of the additional rotation around the own axis of rotation on the main body of the rotor. Optionally, in case of presence of the of the aforesaid teeth of the grid, the product is grinded by the teeth during the creeping against the inner surface of the grid, due also to the pressure action of the knife against the latter. Once reached a size comparable to that of the openings of the grid, the product cross the latter for reaching the conveying chamber, in which it is put into further rotation for effect of the rotation of the supply vanes 52, until his expulsion through the supply mouth due to the tangential velocity gained.

## Claims

1. A machine (1) for shredding bedding products comprising:
- a frame (2);
- a feeding mouth (3) associated to the frame for the loading of the bedding products in the machine;
- a shredding device (4) mounted on the frame for shredding said bedding products;
- a supply mouth (6) associated to the frame for the supply of the bedding products after the shredding;
- a device for crumbling (12) the bedding products shredded by the shredding device comprising:
- a rotor (13) swively mounted on said frame so that it can rotate around an axis of rotation (14) and having a peripheral portion (15) disposed concentrically to said axis of rotation, said rotor defining a radial direction (16) perpendicular to the axis of rotation, the rotor comprising a main body (38) and a plurality of knives (19) swively mounted on the main body near the peripheral portion of the rotor so that they can rotate freely with respect to the main body with relative axis of rotation parallel to the axis of rotation of the rotor, where said knives are configured for crumbling, as a result of rotor rotation, the bedding products shredded from the shredding device and
- a grid (17) mounted on said frame and arranged to surround at least a portion of the peripheral portion of the rotor, in a position radially external to said knives, and provided with a plurality of openings (18) radially passing through the grid, and
- a conveying device (70) mounted on the frame and configured for conveying to the supply mouth the bedding products which cross said openings of the grid.

2. The machine (1) according to claim 1, wherein each knife has a prevailing longitudinal development, a first end (20) swively fixed to the main body and a second end (21) which is free and longitudinally opposite to the first, the second end having an end edge, distal to said first end, provided with a cutting blade (22).

3. The machine (1) according to any one of the preceding claims, wherein the rotor and the grid define a crumbling area radially internal to the grid suitable for containing the bedding products shredded by the shredding device and subjected to crumbling by knives, the rotor and the grid being configured so that bedding products can pass from the crumbling area to the conveying device exclusively through said openings (18) of the grid.

4. The machine (1) according to any one of the preceding claims, wherein said knives and the grid are configured for cooperating together for crumbling the shredded bedding products, the minimum distance between the knives and the grid being such that, when the knives are in a position corresponding to such a minimum distance, the bedding products are pressed between the knives and the grid and crumbled by said cutting blade (22) of the distal end edge, which is directed towards the grid.

5. The machine (1) according to any one of the preceding claims, wherein the main body of the rotor comprises a plurality of conveying vanes (28) angularly distributed around the axis of rotation, each vane having a face (29) radially proximal to the axis of rotation and lying on a surface developing substantially along the radial direction and parallel to the axis of rotation.

6. The machine (1) according to any one of the preceding claims, wherein the main body of the rotor comprises a disc (26), concentric to said axis of rotation, having laminar shape and lying substantially on a plane substantially transverse to said axis of rotation, the knives being swively mounted on a respective pin (27) having a first end mounted on said disc near a perimeter portion of it radially distal from the axis of rotation, the knives being swively mounted on the main body (38) so that they can make a complete free rotation with respect to it.

7. The machine (1) according to claim 6, wherein the main body of the rotor comprises a plurality of supports (31) arranged in rays substantially concentric to said axis of rotation of the rotor, where each of said pin has a second end mounted on a respective support near a respective end (32) radially distal to the axis of rotation.

8. The machine (1) according to claim 6, wherein the rotor comprises an additional disc (33) integral with, and parallel to, said disc (26) and concentric to said axis of rotation, each of said pin having a second end mounted on said additional disc (33) near a respective perimeter portion of it radially distal from the axis of rotation, and where the shredding device comprises a shredding member (60) provided with teeth (61) and swively mounted on the frame with its axis of rotation coincident with the axis of rotation of said rotor, said shredding member coinciding with said additional disc (33).

9. The machine (1) according to any one of the preceding claims, wherein the radially inner surface of the grid is provided with a plurality of teeth (41) protruding towards the axis of rotation of the rotor perpendicularly to the surface of the grid.

10. The machine (1) according to any one of the preceding claims, wherein the conveying device (20) comprises a conveying chamber (50) configured for receiving and containing the bedding products which cross the openings of the grid and a plurality of supply vanes swively mounted on the frame so that they can rotate with respective axis of rotation parallel to said axis of rotation of the rotor, the supply vanes being configured for putting in rotation, due to their rotation, the bedding products within the conveying chamber, up to their supply through the supply mouth due to the tangential velocity gained.
